# EUROPÄISCHE PATENTSCHRIFT

(11) **EP 3 000 582 B1**
(45) Veröffentlichungstag und Bekanntmachung des Hinweises auf die Patenterteilung: **25.03.2020**
(21) Anmeldenummer: 15185144.1
(22) Anmeldetag: 14.09.2015
(51) Int. Cl.: B29C 48/60, B29C 48/40, B29C 48/62, B29B 7/48

(54) **EXTRUDERSCHNECKE**
EXTRUDER SCREW
VIS SANS FIN D'EXTRUSION

(30) Priorität: 29.09.2014 DE 102014219706
(43) Veröffentlichungstag der Anmeldung: 30.03.2016
(73) Patentinhaber: battenfeld-cincinnati Austria GmbH, 1239 Wien (AT)
(72) Erfinder: Selvasankar, Ramesh Kumar, 1140 Wien (AT)

(56) Entgegenhaltungen:
- CH-A- 535 109
- JP-U- S61 175 428
- US-A- 1 423 768
- US-A- 2 745 643

## Beschreibung

Die Erfindung betrifft einen Doppelschneckenextruder für thermoplastische Materialien.

Zum Aufschmelzen des Kunststoffgranulates wird dieses vor allem zwischen den Stegen der ineinander kämmenden Schnecken eines Doppelschneckenextruders gewalkt. Die Spalte, die durch den Schneckeneingriff gebildet sind, tragen wesentlich zur Scherung, Plastifizierung und Homogenisierung der Kunststoffmasse bei.

Aus dem Stand der Technik ist die DE 29 11 834 A1 bekannt, bei der das Prinzip des Kämmens von Doppelschnecken ersichtlich ist. Kämmende Doppelschnecken werden auch in den Druckschriften DE 42 36 496 A1, DE 198 39 374 A1, US 2 745 643 A, JP S61 175428 U, CH 535 109 A und US 1 423 768 A offenbart. Wesentlich ist dabei die Fläche die sich an den Stegen ergibt, um das Granulat zu walken. Im Zwickelbereich dringt ein Steg der Gegenschnecke in die Gänge der ersten ein und bildet an der engsten Stelle einen Walz- und Flankenspalt. Diese Spalte bzw. Zwischenräume und die Schneckenoberfläche beeinflussen die Plastifizierleistung der Schnecke.

**Aufgabe** der Erfindung ist es, eine bekannte Schneckengeometrie so weiterzubilden, dass eine größtmögliche Oberfläche an den Stegen und dadurch an der gesamten Oberfläche der Schnecke vorherrscht. Weiterhin soll der Verschleiß der Schnecke minimiert werden.

Diese Aufgabe wird durch die Merkmale des Anspruchs 1 gelöst. Durch diese erfindungsgemäße Ausführung der Schneckenstege wird die Oberfläche der Extruderschnecke vergrößert.

Die Schnecken weisen also ein Einlassende und ein Auslassende mit einem langgestreckten Kern mit einem nach außen abstehenden schraubenförmig verlaufenden Schneckensteg auf, wobei die Stege (Berge) der einen Schnecke in die Kammern/Kanal (Täler) zwischen den Stegen der anderen Schnecke eingreifen.

Zwischen der ersten Extruderschnecke und der zweiten Extruderschnecke entsteht erfindungsgemäß ein Zwischenraum. Durch den treppenartigen Aufbau wird die Anzahl der Zwischenräume erhöht, wodurch die Plastifizierung des Materials verbessert wird. Die mehreren Lücken führen zu mehr Leckstrom was die Mischeffizienz verbessert.

Vorteilhafterweise kann die Breite des Zwischenraums zwischen 0,5 mm und 3mm variieren und bei jeder Stufe unterschiedlich sein. Dies ermöglicht eine sehr variable Ausgestaltung des Stufenverlaufes der Treppen.

Diese Flexibilität in der Ausführung führt erfindungsgemäß dazu, dass der Zwischenraum an den Flanken der Schneckenstege sich vom Zwischenraum am Rücken der Schneckenstege unterscheidet.

In einer weiteren Fortbildung ist vorgesehen, dass die Anzahl der Stufen der Treppe in Abhängigkeit der Breite des Schneckensteges zwei oder drei Stufen umfasst.

In den Zeichnungen wird schematisch eine erfindungsgemäße Vorrichtung gezeigt:
- Fig. 1: zeigt eine typische Extrusionslinie
- Fig. 2: zeigt einen Ausschnitt zweier kämmender Extruderschnecken
- Fig. 3: zeigt einen Schnitt durch die Schnecken nach Figur 2
- Fig. 4: einen 3D-Abschnitt eines Schneckensteges
- Fig. 5: einen 3D-Abschnitt eines alternatives Schneckensteges
- Fig. 6: zeigt einen Ausschnitt zweier kämmenden Extruderschnecken gemäß der Erfindung
- Fig. 7: einen 3D-Abschnitt eines Schneckensteges gemäß der Erfindung

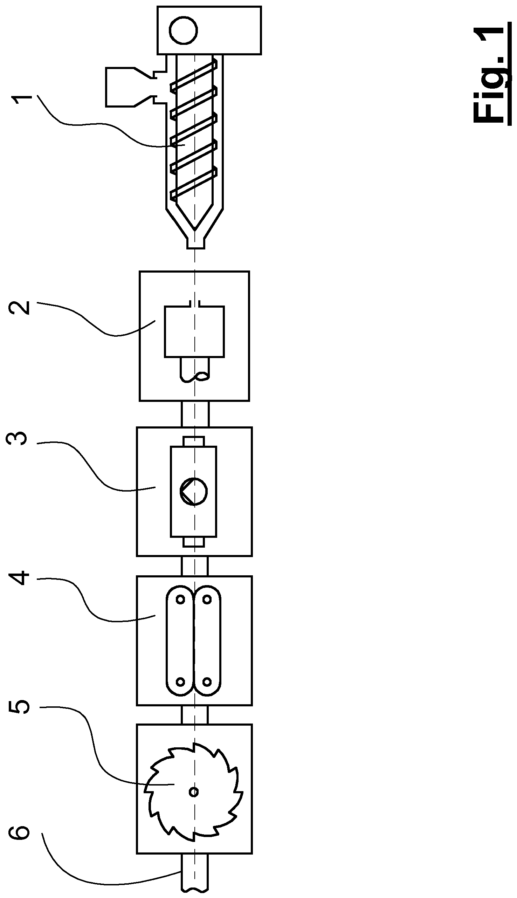

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühlstation 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet.

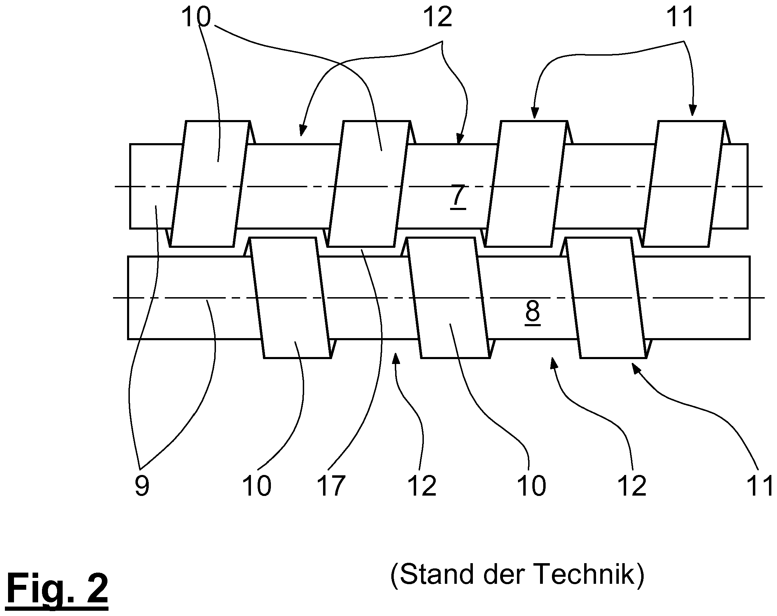

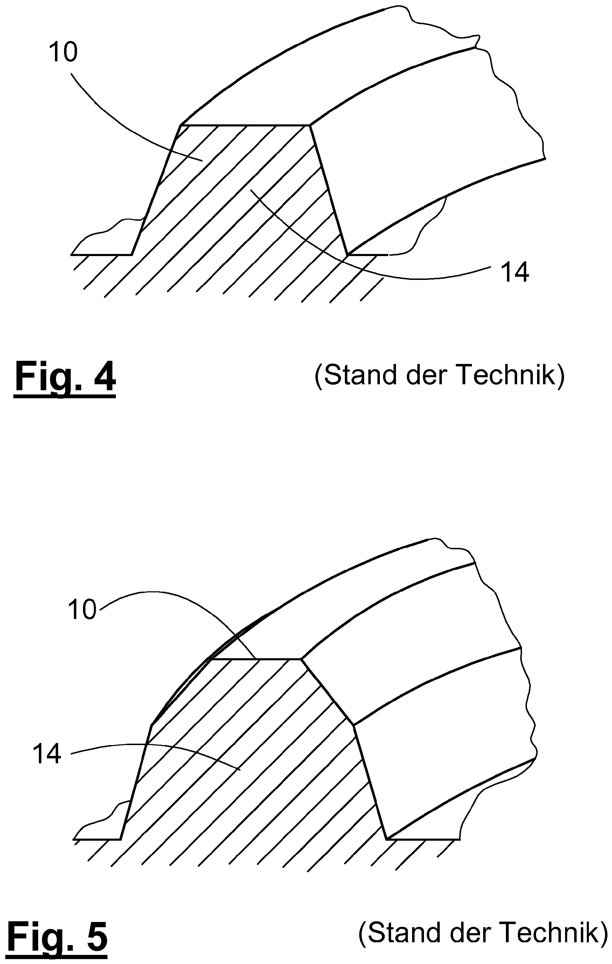

Figur 2 zeigt eine schematische Darstellung zweier kämmender Extuderschnecken in einem Ausschnitt. Eine erste Extruderschnecke 7 und eine zweite Extruderschnecke 8 sind so nebeneinander angeordnet, dass Schneckenstege 10 als Berge 11 in den Tälern 12 der benachbarten Schnecke eingreifen, ohne dass sich die Schnecken berühren. Zwischen beiden Schnecken besteht ein Zwischenraum 17. Die Form der Schneckenstege 10, die sich entlang des Kerns 7 von einem Einlassende zu einem Auslassende erstrecken, kann im Querschnitt trapezförmig, wie in Figur 5 oder trapezförmig mit Abschrägung wie in Figur 4 dargestellt, ausgeführt sein. Die Ausführung gemäß der Figuren 2, 4 und 5 kennzeichnen den Stand der Technik.

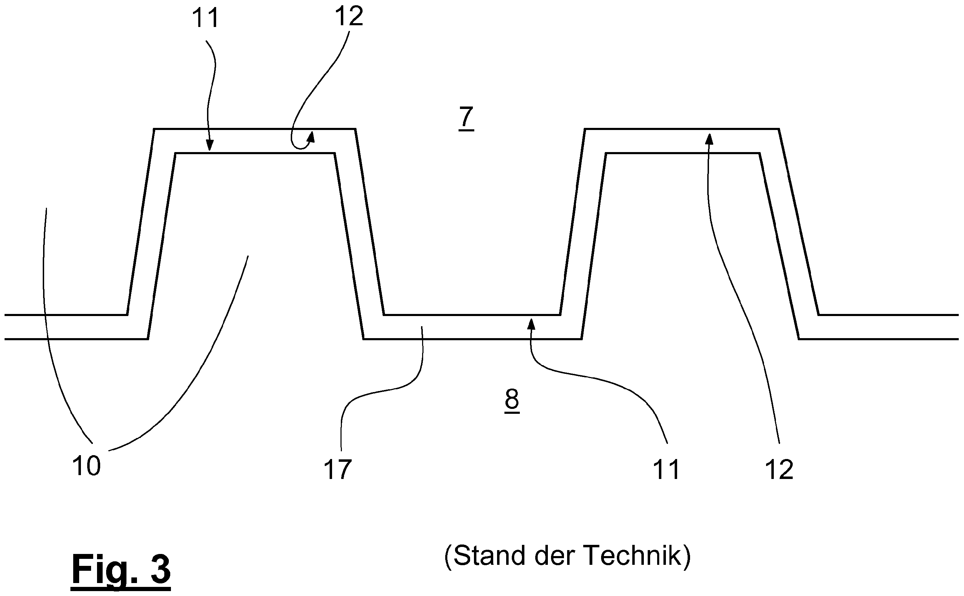

Figur 3 verdeutlicht dies noch einmal in einer vergrößerten Darstellung. Die erste Extruderschnecke 7 und die zweite Extruderschnecke 8 haben trapezförmige Schneckenstege 10 durch die Berge 11 und Täler 12 am Umfang der Schnecke entstehen. Die Extruderschnecken kämmen so nebeneinander, dass sie sich nicht berühren und ein Zwischenraum 17 vorherrscht. Auch die Figur 3 gibt somit den Stand der Technik wieder.

Wie bereits oben erwähnt, sind in den Figuren 4 und 5 beispielhaft zwei übliche Querschnitt der Schneckenstege 10 wieder gegeben.

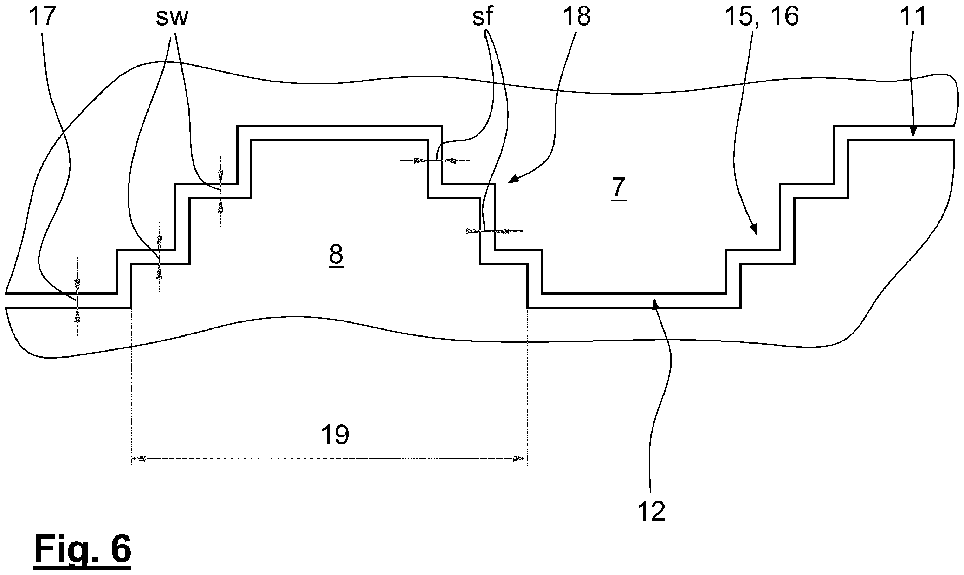

Die Figur 6 verdeutlicht in einem Ausschnitt, analog zur Figur 2, den erfindungsgemäßen Aufbau der Schneckenstege 10. Sowohl die erste Extruderschnecke 7, als auch die zweite Extruderschnecke 8, hat einen Schneckensteg 10. Durch diesen Schneckensteg 10 entstehen am Umfang der Schnecke Berge 11 und Täler 12.

Die Flanken der Stege sind hier aber nun, im Gegensatz zum bekannten Stand der Technik, treppenartig ausgeführt. Der Stufenverlauf 16 der Treppen 15 der ersten Extruderschnecke 7 ist kongruent zum Stufenverlauf 16 der zweiten Extruderschnecke 8. Damit ist sichergestellt, dass immer die Erhebung, also der Berg 11, der einen Extruderschnecke, in die Vertiefung oder Aussparung, also dem Tal 12, der anderen Extruderschnecke passt, ohne dass diese sich berühren. Zwischen den beiden Schnecken besteht immer ein Zwischenraum 17. Je nach Breite 19 des Schneckensteges 10 weist die Treppe 15 zwei oder drei Stufen 18 auf.

In Figur 6 sind beispielhaft drei Stufen 18 je Treppe 15 dargestellt. Der Zwischenraum 17 zur benachbarten Extruderschnecke ist an den Flanken mit sf und an den Rücken mit sw bezeichnet. Der Zwischenraum 17 kann sich von Stufe zu Stufe und von Flanke zu Flanke sowie von Flanke zu Rücken unterscheiden. Somit kann sfl unterschiedlich zu sf2, unterschiedlich zu sf3 und natürlich auch zu sw sein. aber auch sw1 unterschiedlich zu sw2 und sw3.

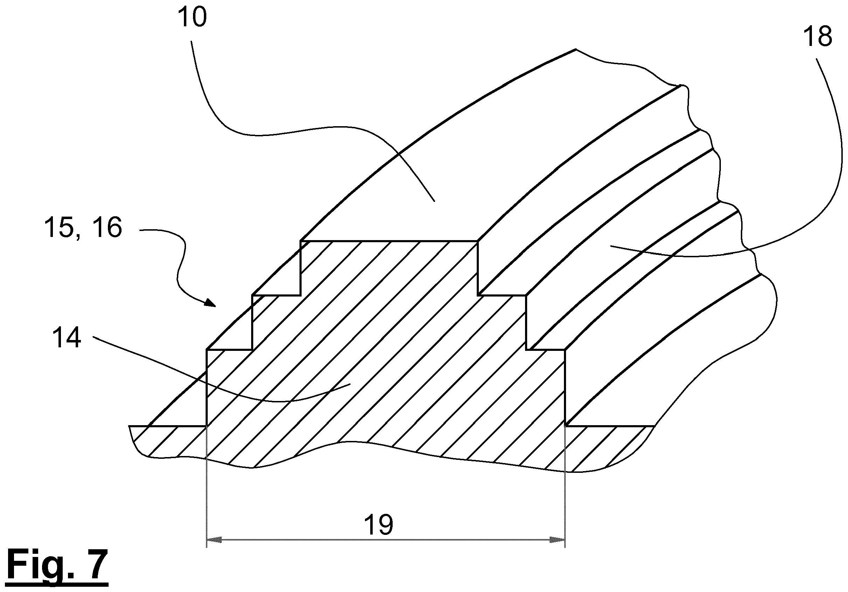

Der in Figur 7 wiedergegebene erfindungsgemäße Schneckensteg 10 zeigt den treppenförmigen Aufbau mit dem Querschnitt 14, der Treppe 15, den Stufen 18 und die Breite 19 des Schneckensteges 10. Zur Verdeutlichung ist der Schneckensteg 10 als 3D-Darstellung angedeutet.

### Bezugszeichenliste:

- 1: Extruder
- 2: Extrusionswerkzeug
- 3: Kalibrier- und Kühltank
- 4: Abzugsvorrichtung
- 5: Trennvorrichtung
- 6: Profil
- 7: erste Extruderschnecke
- 8: zweite Extruderschnecke
- 9: Kern von 7 oder 8
- 10: Schneckenstege von 7 oder 8
- 11: Berge von 7 oder 8
- 12: Täler von 7 oder 8
- 13: Geometrie von 10
- 14: Querschnitt von 10
- 15: Treppe von 10
- 16: Stufenverlauf von 15
- 17: Zwischenraum zwischen 7 und 8
- 18: Stufe von 15
- 19: Breite von 10

- sw: 17 am Rücken von 10
- sf: 17 an der Flanke von 10

## Patentansprüche

1. Doppelschneckenextruder für thermoplastische Materialien, mit einer ersten (7) und einer zweiten (8) Extruderschnecke,
wobei die Extruderschnecken (7, 8) jeweils ein Einlassende, ein Auslassende und einen Kern (9) aufweisen, wobei über den Kern (9) schraubenförmig verlaufende Schneckenstege (10) vom Einlassende zum Auslassende angeordnet sind, so dass am Umfang der Schnecken Berge (11) und Täler (12) entstehen,
wobei die Berge (11) der ersten Schnecke (7) in die Täler (12) der zweiten Schnecke (8) und umgekehrt eingreifen und die Schneckenstege (10) eine Geometrie (13) aufweisen die im Querschnitt (14) treppenförmig ausgestaltet ist,
wobei die Treppen (15) so ausgeführt sind, dass ein Stufenverlauf der Berge (11) der ersten Schnecke (7) zu einem Stufenverlauf der Täler (12) der zweiten Schnecke (8) kongruent ist und zwischen **der ersten Schnecke (7)** und der zweiten **Schnecke (8) ein Zwischenraum (17) entsteht, dadurch gekennzeichnet, dass**
**der Zwischenraum (17) an den Flanken (sf)** der Schneckenstege (10) **sich vom Zwischenraum (17) am Rücken (sw) der Schneckenstege (10) unterscheidet.**

2. Doppelschneckenextruder nach Anspruch 1, **dadurch gekennzeichnet, dass** die Breite der Zwischenräume (17) (17) zwischen 0,5 mm und 3mm variiert.

3. Doppelschneckenextruder nach Anspruch 2, **dadurch gekennzeichnet, dass** der Zwischenraum (17) bei jeder Stufe unterschiedlich ausgebildet ist.

4. Doppelschneckenextruder nach einem der vorigen Ansprüche, **dadurch gekennzeichnet, dass** die Anzahl der Stufen (18) der Treppe (15) in Abhängigkeit der Breite (19) des Schneckensteges (10) zwei oder drei Stufen (18) umfasst.

## Claims

1. Twin-screw extruder for thermoplastic materials with a first (7) and a second (8) extruder screw, the extruder screws (7, 8) featuring an inlet end, an outlet end and a core (9) each,
screw flights (10) which are helically wound around the core (9) being arranged from the inlet end to the outlet end, thus creating crowns (11) and valleys (12) around the perimeter, the crowns (11) of the first screw (7) being included in the valleys (12) of the second screw (8) and vice versa and the screw flights (10) featuring a geometry that is staircase-shaped when looked at in a cross-section (14), the stairs being designed in such a way that the course of the steps of the crowns (11) of the first screw (7) are congruent to the course of the steps of the valleys (12) of the second screw (8) **and a gap (17) is formed** between **the first screw (7)** and **the second screw (8),**
**characterized in that**
**the gap (17) on the flanks (sf)** of the screw flights (10) **differing** from **the gap (17) at the back (sw) of the screw flights (10).**

2. Twin screw extruder according to claim **1**, **characterized in that** the width of the gaps (17) varies between 0,5 mm and 3 mm.

3. Twin screw extruder according to claim **2**, **characterized in that** the gap (17) is designed differently at each step.

4. Twin screw extruder according to one of the preceding claims, **characterized in that** the number of steps (18) of the stairs (15) comprises two or three steps (18) depending on the width of the screw flight.

## Revendications

1. Extrudeuse à double vis pour des matériaux thermoplastiques avec une première (7) et une deuxième (8) vis d'extrusion, les vis d'extrusion (7, 8) montrant chacune une extrémité d'entrée, une extrémité de sortie et un noyau (9),
des filets de vis (10) enroulés en hélice autour du noyau (9) étant arrangés entre l' extrémité d'entrée et l'extrémité de sortie, des crêtes (11) et des creux (12) survenant au périmètre des vis,
les crêtes (11) de la première vis (7) s'imbriquant dans les creux (12) de la deuxième vis (8) et inversement et
les filets de vis (10) montrant une géométrie qui, vue en section transversale (14), est disposée en escalier,
les escaliers (15) étant adaptés de telle manière que l'inclinaison des marches des crêtes (11) de la première vis (7) soit alignée avec l'inclinaison des marches des creux (12) de la deuxième vis (8) et **qu'une espace est crée** entre **la première vis (7)** et **la deuxième vis (8),**
**caractérisée en ce que**
**l'espace (17) aux flancs (sf)** des filets de vis (10) **diffère de l'espace (17) au dos (sw) des filets de vis (10).**

2. Extrudeuse à double vis selon la revendication **1**, **caractérisée en ce que** la largeur des espaces (17) varie entre 0,5 mm et 3 mm.

3. Extrudeuse à double vis selon la revendication **2**, **caractérisée en ce que** l'espace (17) est conçue de manière différente pour chaque marche.

4. Extrudeuse à double vis selon l'une quelconque des revendications précédentes, **caractérisée en ce que** le nombre de marches (18) de l'escalier (15) comprend deux ou trois marches (18) en fonction de la largeur (19) du filet de vis (10).
